# EUROPEAN PATENT SPECIFICATION

(11) **EP 3 492 517 B1**
(45) Date of publication and mention of the grant of the patent: **12.06.2024**
(21) Application number: 19150091.7
(22) Date of filing: 20.10.2017
(51) Int. Cl.: C08J 5/04, C08J 5/06, C08J 5/24, C08J 3/24, B29C 70/30

(54) **INSERTION OF CATALYST INTO DRY FIBERS PRIOR TO RESIN IMPREGNATION**
EINFÜGUNG EINES KATALYSATORS IN TROCKENE FASERN VOR DER HARZIMPRÄGNIERUNG
INTRODUCTION D'UN CATALYSEUR DANS DES FIBRES SÈCHES AVANT IMPRÉGNATION DE RÉSINE

(30) Priority: 25.10.2016 US 201615333826; 10.11.2016 NL 2017758
(43) Date of publication of application: 05.06.2019
(62) Divisional of application: 17197632.7
(73) Proprietor: The Boeing Company, Arlington, VA 22202 (US)
(72) Inventor: HUMFELD, Keith Daniel, Chicago, IL Illinois 60606-1596 (US); LANPHERE GROSS, Gwen Marie, Chicago, IL Illinois 60606-1596 (US)
(74) Representative: Duxbury, Stephen

(56) References cited:
- EP-A1- 3 000 850
- EP-A2- 0 672 707
- US-A- 3 395 105
- DATABASE WPI Week 199817 Thomson Scientific, London, GB; AN 1998-189393 XP002771944, & JP H10 45925 A (ARISAWA MFG CO LTD) 17 February 1998 (1998-02-17)

## Description

### Field

The disclosure relates to the field of composite materials, and in particular, to materials utilizing thermoset fibers, especially carbon fibers.

### Background

Pre-impregnated ("pre-preg") laminates of carbon fiber may be laid-up in a series of plies (tow/sections of carbon fiber tape) that are arranged into a complex shape and then cured into a composite part (e.g., a Carbon Fiber Reinforced Polymer (CFRP) part) having desired physical properties. Pre-preg laminates may be initially fabricated as a batch of dry carbon fibers that are oriented parallel with each other, which may then be impregnated with a thermoset resin. A resin may include, for example, a liquid suspension of multifunctional
epoxy monomers which chemically react to form a solid polymer that binds carbon fibers together. Since the rate of polymerization may be particularly slow (e.g., operating on time scales that are unsuitable for mass fabrication), a catalyst is included within the resin to accelerate the rate of polymerization for the monomers. The pre-preg may then be laid-up into a desired form and cured.

However, it remains a complex process to balance the ratios of catalyst, monomer, and fiber. Since laminates may be fabricated as a series of layers that form a desired shape, it is desirable for resin to maintain sufficient adhesiveness (tack) at room temperature in order to ensure that plies adhere to each other, while still curing (engaging in accelerated polymerization) at an elevated temperature.

The curing kinetics of pre-preg laminates dictate that a balance be struck between work life and cure time. Work life corresponds with the amount of time that a ply exhibits tack (e.g., at room temperature) before curing. For pre-preg laminates that utilize a substantial amount of catalyst within the resin, work life is shortened and the resin rapidly becomes viscous, which is detrimental to layup processes. That is, although increased amounts of catalyst may provide highly accelerated cure times, they also may lead to an impractically short work life ("pot life") for a laminate. In contrast, if not enough catalyst is utilized then cure time is extended, which reduces efficiency.

Certain pre-preg laminates may utilize a heat-activated catalyst within the resin in order to selectively trigger accelerated polymerization and thereby increase work life. However, heat-activated catalysts within the resin may fail to adequately penetrate between carbon fibers during the impregnation process, resulting in non-uniform distribution of resin (and therefore non-uniform cure characteristics) throughout the resulting pre-preg laminate, which is undesirable. In further embodiments, instead of a pre-preg laminate, a dry pre-form laminate may be utilized that comprises a batch of dry fibers that occupies a three dimensional (3D) shape.

For at least the reasons discussed above, it is desirable to seek out enhanced pre-preg laminates that uniformly exhibit desired properties of work life and cure time.

### Summary

The present invention beneficially intersperses and/or bonds and/or attracts catalyst capsules (e.g., capsules that release catalyst in response to heat) among/to a batch of dry fibers, preferably carbon fibers, prior to impregnation of the fibers with resin.

Because dry fibers are easily deflected with the application of force, the ability of the catalyst capsules to penetrate deep into a batch of fibers is enhanced. Thus, adding catalyst capsules prior to the impregnation process beneficially increases the ability of the catalyst capsules to be evenly dispersed in the resulting laminate, which ensures that the laminate exhibits uniform characteristics relating to cure time and/or work life.

The present invention relates to a method that includes obtaining a batch of dry fibers and a batch of catalyst capsules that each comprise catalyst that accelerates polymerization of monomers of a resin. A shell encapsulates the catalyst and ruptures under predetermined conditions. The capsule shell liquefies at a curing temperature. The method further includes interspersing the catalyst capsules among the dry fibers. The method further includes attracting and/or attaching the interspersed catalyst capsules to one or more of the dry fibers. The catalyst capsule is preferably made from, or coated with, a material which is attracted or adheres to the dry fiber, for example a dry carbon fiber, but which material is not soluble in the resin. Such a material can comprise a polycyclic aromatic hydrocarbon.

The catalyst capsules and/or one or more of the carbon fibers may be provided with an epoxy glue to provide a co-valent bonding between the capsules and the fibers.

In particular, the present invention provides method of providing a preform and a resin for mixing together to provide a composition for a composite part, the method comprising the steps of:
obtaining a batch of dry fibers,
obtaining a batch of catalyst capsules, each capsule comprising a catalyst and a shell that encapsulates the catalyst, which shell is rupturable under predetermined conditions to thereby release the encapsulated catalyst;
obtaining a resin for impregnating the batch of dry fibers, wherein the catalyst accelerates polymerization of monomers in the resin;
interspersing the catalyst capsules among the dry fibers;
attracting and/or attaching the catalyst capsules to one or more of the dry fibers;
wherein the resin for impregnating the batch of dry fibers is a catalyst free resin.

Since the catalyst is contained in capsules, which capsules are interspersed among the dry fibers and also attracted and/or bonded to the dry fibers, there is no need for the resin to comprise any catalyst, and the catalyst capsules remain on the fibers during resin impregnation.

Alternatively, the fibers used in the present invention need not be dry.

Dry fibers are understood in the art to be fibers which have not been exposed to a curing resin.

Following interspersing of the catalyst capsules the dry fibers and attracting and/or attaching the interspersed catalyst capsules to the dry fibers, the latter may be impregnated with the resin whereby on attaining the predetermined conditions the shells rupture to release the catalyst to thereby catalyze polymerization of the resin monomers.

The catalyst capsules can be attracted and/or attached to the fibers by way of providing the fibers with an electrostatic charge, preferably by one or more of the following:
via static electricity, for example by applying an electric charge to the capsules preferably by way of an electron gun;
via a chemical reaction, for example by way of applying the capsules via an acid/base chemical bath to the fibers, or wherein the capsules are included in a chemical suspension applied to the fibers;
via Van der Waals forces.

One or more of the fibers may attract and/or attach the catalyst capsules during interspersion, and/or attract and/or attach the resin monomers during impregnation, by way of a surface feature or sizing arranged on the surface of one or more of the fibers, which surface feature preferably includes one or more carbon nanotubes, and/or one or more polymeric structures.

Interspersing of the catalyst capsules among the fibers, may comprise one or more of the following process steps:
blowing the catalyst capsules through the dry fibers;
combing the catalyst capsules through the dry fibers;
separating the fibers with a tension bar, and sifting the catalyst capsules through the fibers.

The step of rupturing the capsule shells can be carried out by one or more of the following process steps;
heating the catalyst capsules to the predetermined condition of a temperature to liquefy the shell and release the catalyst from the capsules to mix with the resin and thereby accelerate polymerization of the resin monomers, which temperature is preferably the curing temperature of the resin;
subjecting the shell, which further comprises a pocket of gas within the shell, to a predetermined pressure and/or predetermined temperature, under which predetermined pressure and/or temperature the shell ruptures to release the resin monomer polymerizing catalyst;
heating the catalyst capsules to the predetermined temperature whereby a second catalyst contained in the shell melts in order to release the resin polymerizing catalyst.

Following rupturing of the catalyst capsules, a curing step may be carried out to provide a composite part. The invention also relates to a composite part obtainable in this process and an aircraft which comprises such a composite part.

The present invention also relates to a preform for a composite part, the preform comprising:
dry fibers, and
catalyst capsules interspersed among the dry fibers- each catalyst capsule comprising a shell and a catalyst encapsulated within the shell, which catalyst accelerates polymerization of resin monomers usable in curing the preform- wherein one or more of the fibers are configured to attract and/or attach the interspersed catalyst capsules to the surface of the fibers.

Configuring the dry fibers to attract and/or attach the catalyst capsules thereto, means that an improved distribution of the catalyst in the fibers is obtained and also obviates the necessity of encompassing the catalyst within the resin prior to impregnation.

The dry fibers are preferably configured by way of a feature or sizing arranged on a surface of one or more of the dry fibers, which surface feature or sizing preferably comprises one or more of the following:
a carbon nanotube,
a polymeric structure, which polymeric structure is optionally preprovided with an amount of the catalyst capsules trapped therein.

The dry fibers can also be configured by way of providing an electrostatic charge to the surface of one or more of the dry fibers.

The dry fibers may for example be carbon fibers, fiberglass fibers or metal fibers.

The preform may have one or more of the following technical characteristics:
- a volume ratio of dry carbon fibers to catalyst capsules of between ten to one and two to one, preferably wherein the volume ratio of dry carbon fibers to catalyst capsules is five to one;
- wherein the catalyst capsules are spherical and the dry carbon fibers are cylindrical preferably wherein the catalyst capsules have a diameter one fifth a diameter of the dry carbon fibers;
- wherein the catalyst capsules are cylindrical and the dry carbon fibers are cylindrical, preferably wherein the catalyst capsules have a diameter of between two fifths and three fifths a diameter of the dry carbon fibers;
- having multiple catalyst capsules attached to each dry carbon fiber along a circumference of the dry carbon fiber.

The catalyst capsules may comprise one or more of the following:
- elongated filaments having a thickness between 2 and 3 µm (two and three microns),
- elongated filaments having a thickness between two fifths and three fifths a thickness of the fibers,
- the catalyst capsules are spherical and have a diameter of 1 µm (one micron),
- the catalyst capsules have a diameter that is one fifth the thickness of a dry fiber.

The catalyst capsules may also contain:
a second catalyst that melts at the predetermined temperature in order to release the resin polymerizing catalyst; and/or
a pocket of gas within the shell which under a predetermined pressure ruptures the shell to release the resin monomer polymerizing catalyst.

The present invention also relates to a method of providing a pre-form comprising the steps of obtaining a batch of dry fibers, configuring one or more of the dry fibers within said batch to attract and/or attach catalyst capsules thereto; interspersing catalyst capsules among the dry fibers and attracting and/or attaching the catalyst capsules to one or more of the dry fibers - which catalyst capsules comprise a catalyst and a shell that encapsulates the catalyst, which shell is rupturable under predetermined conditions to thereby release the encapsulated catalyst.

The present invention also relates to a system that includes the dry fibers and the supply of catalyst capsules, which system also includes an apparatus that intersperses the catalyst capsules among dry fibers.

The apparatus can comprise means for interspersing catalyst capsules among dry fibers, means for impregnating the dry fibers with catalyst free resin, means for tacking the capsules to the fibers and means for laying up a preform.

The present invention also relates to a method comprising impregnating dry fibers with a catalyst free resin, interspersing catalyst capsules amongst the resin impregnated fibers, tacking the capsules to the fibers and laying up a preform.

Alternatively, the dry fibers can be provided with a tackifier before interspersing the resin with catalyst capsules followed by tacking the catalyst capsules to the fibers and laying up a preform.

Other examples (e.g., methods and computer-readable media relating to the foregoing embodiments) may be described below.

The inventors have realized that attracting and/or attaching the catalyst capsules to the dry fibers in such a way that these remain attracted to and/or attached to the dry fibers when the dry fibers are impregnated with resin, ensures that the catalyst capsules are not for example washed away or undesirably displaced within the laminate during resin impregnation.

Displacement of the catalyst during resin impregnation can lead to uneven concentrations of catalyst within the laminate prior to curing.

The invention also enables the resin to be catalyst free, and thus easier to handle and more efficient to use.

Furthermore, the invention also provides for an improved cured composite structure with consistent properties, since the catalyst remains evenly concentrated within the laminate on curing. This is especially desirable when mass producing such composite structures.

The inventors have realized that electrostatic forces can be used to attract and/or attach the catalyst capsules to the dry fibers, but also that physical means can be used for attracting and/or attaching the catalyst capsules.

These physical means or surface features - also known in the art as 'sizings' - can include nanotubes, such as carbon nanotubes attached to the surface of the dry fibers. Carbon nanotubes can be grown on the surface of the fibers.

Alternative physical means include polymeric structures attached to the dry fiber surface which entrap or geometrically confine the catalyst capsules. A sizing can for example be a dispersion of the catalyst capsules entrapped within a polymeric matrix attached to the dry fibers before resin impregnation.

EP 3000850 A1 discloses a thermosetting resin containing a plurality of polymer nanoparticles for mixing with reinforcing fibers which release a catalyst or hardener during the resin curing process to provide a composite part. This document discloses that polymer nanoparticles may be directly added to composite plies, but teaches that the thermosetting resin always contains a plurality of the polymer nanoparticles.

The disclosure also includes the following:
A method of providing a preform and a resin for mixing together to provide a composition for a composite part, the method comprising the steps of,
obtaining a batch of dry fibers; obtaining a batch of catalyst capsules, each capsule comprising a catalyst and a shell that encapsulates the catalyst, which shell is rupturable under predetermined conditions to thereby release the encapsulated catalyst; obtaining a resin for impregnating the batch of dry fibers, wherein the catalyst accelerates polymerization of monomers in the resin; interspersing the catalyst capsules among the dry fibers and,
attracting and/or attaching the catalyst capsules to one or more of the dry fibers; wherein the resin for impregnating the batch of dry fibers is a catalyst free resin.

The fibers can be impregnated with the resin after interspersing the catalyst capsules among the fibers, and attracting and/or attaching the interspersed catalyst capsules to the fibers, whereby on attaining the predetermined conditions the shells rupture to release the catalyst to thereby catalyze polymerization of the resin monomers.

The catalyst capsules can be attracted and/or attached to the fibers by way of providing the fibers with an electrostatic charge, preferably by one or more of the following: via static electricity, for example by applying an electric charge to the capsules preferably by way of an electron gun; via a chemical reaction, for example by way of applying the capsules via an acid/base chemical bath to the fibers, or wherein the capsules are included in a chemical suspension applied to the fibers; via Van der Waals forces.

One or more of the fibers can attract and/or attach the catalyst capsules during interspersion, and/or can attract and/or can attach the resin monomers during impregnation, by way of a surface feature or sizing arranged on the surface of one or more of the fibers, which surface feature preferably includes one or more carbon nanotubes, and/or one or more polymeric structures.

Interspersing the catalyst capsules among the fibers, may comprise one or more of the following; blowing the catalyst capsules through the dry fibers;
combing the catalyst capsules through the dry fibers;
separating the fibers with a tension bar, and sifting the catalyst capsules through the fibers.

The method can further comprise the step of rupturing the capsule shells by one or more of the following; heating the catalyst capsules to the predetermined condition of a temperature to liquefy the shell and release the catalyst from the capsules to mix with the resin and thereby accelerate polymerization of the resin monomers, which temperature is preferably the curing temperature of the resin; subjecting the shell, which further comprises a pocket of gas within the shell, to a predetermined pressure under which predetermined pressure the shell ruptures to release the resin monomer polymerizing catalyst; heating the catalyst capsules to the predetermined temperature whereby a second catalyst contained in the shell melts in order to release the resin polymerizing catalyst.

The method can further comprise curing to provide a composite part.

The dry fibers can be dry carbon fibers.

### Description of the Drawings

The present invention is now described, by way of example only, and with reference to the accompanying drawings. The same reference number represents the same element or the same type of element on all drawings.
FIG. 1 is a diagram of layup of a laminate.
FIG. 2 is a diagram illustrating a zoomed-in view of individual plies of a laminate.
FIGS. 3-4 are section cut views of plies.
FIGS. 5-6 are zoomed in views of carbon fibers to which catalyst capsules are adhered.
FIG. 7 is a flowchart illustrating a method for fabricating a carbon fiber laminate.
FIG. 8 is a diagram illustrating devices that intersperse catalyst capsules among dry carbon fibers.
FIG. 9 is a block diagram illustrating a system for fabricating a carbon fiber laminate.
FIG. 10 is a block diagram illustrating a pre-form comprising dry carbon fiber and pre-interspersed catalyst capsules.
FIG. 11 is a flowchart illustrating a method of utilizing a pre-form comprising dry carbon fiber and pre-interspersed catalyst capsules.
FIG. 12 is a flow diagram of aircraft production and service methodology.
FIG. 13 is a block diagram of an aircraft.

### Description

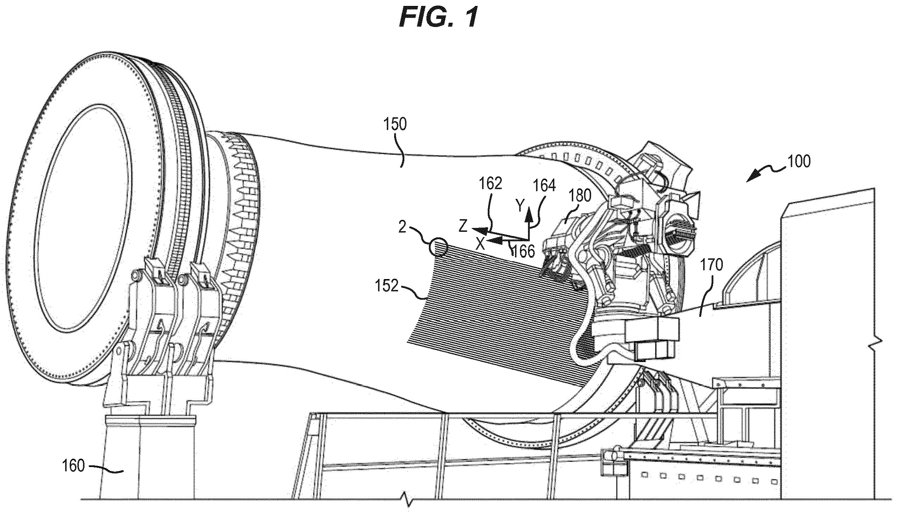

FIG. 1 is a diagram illustrating layup of a laminate according to the present invention. An AFP machine 100 lays up plies 152 of carbon fiber laminate in order to lay up a laminate 150 for curing into a composite part. AFP machine 100 is held by support 170, and comprises any system or device capable of laying up plies 152 of carbon fiber tape for curing into a composite part (e.g., a CFRP part). AFP machine 100 includes end effector/head 180, which dispenses plies 152 during layup (e.g., concurrently). Plies 152 are laid-up to form laminate 150, which comprises one or more layers of material that will be cured into a single monolithic composite part. In this embodiment, laminate 150 comprises a fuselage section for an aircraft, and is held in place by rotational holder 160.

As AFP machine 100 operates to lay up plies 152 onto laminate 150, AFP machine 100 may move directly towards/away from laminate 150 along axis X 166, vertically upwards/downwards along axis Y 164, and/or laterally along axis Z 162. As used herein, when AFP machine 100 lays up multiple plies 152 concurrently during a single "sweep" of head 180, those plies 152 are collectively referred to as a single "course." A set of non-overlapping courses that are applied consecutively may be referred to as a layer. As layers are added to laminate 150, the strength of the resulting composite part is beneficially enhanced.

In order to ensure that plies 152 are laid-up quickly and efficiently, the operations of AFP machine 100 are controlled by an NC program. In one embodiment, the NC program provides instructions on a course-by-course basis for aligning/repositioning AFP machine 100, moving head 180, and laying up plies 152 onto laminate 150. In this manner, by performing the instructions in the NC program, AFP machine 100 fabricates a laminate for curing into a composite part. AFP machine 100 may further heat plies 152 to a tack temperature (e.g., 87.8 ºC (190º F) in order to increase the tack of plies 152. After plies 152 have been laid-up to form the laminate, the laminate may be heated to a curing temperature (e.g., 143.3 ºC (290º F) in order to cure the laminate into a solid composite part.

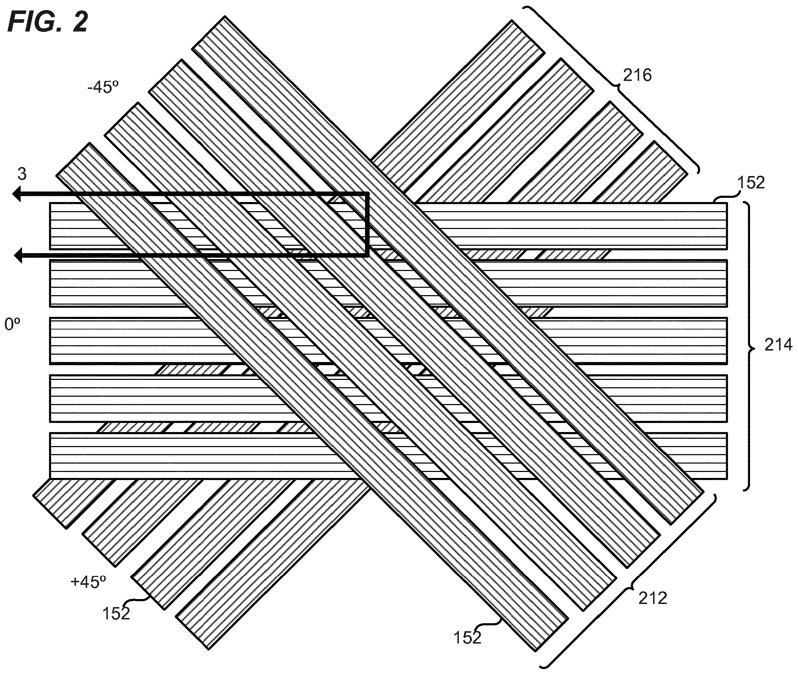

With context regarding the layup of carbon fiber laminates provided above with regard to FIG. 1, FIGS. 2-6 illustrate specific features of carbon fiber laminates. For example, FIG. 2 is a diagram illustrating a zoomed-in view of layers (212, 214, 216) of laminate 150 in an exemplary embodiment. As shown in FIG. 2, plies 152 are arranged into layers 212, 214, and 216. Plies 152 in each layer are substantially parallel, and exhibit a shared fiber orientation/direction. For example, plies 152 in layer 212 are oriented at -45º, plies 152 in layer 214 are oriented at 0º, and plies in layer 216 are oriented at +45º.

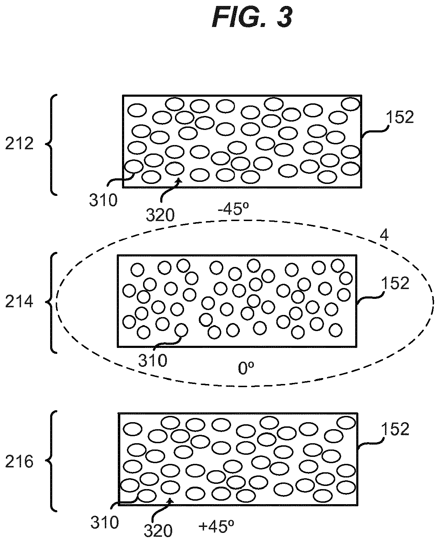

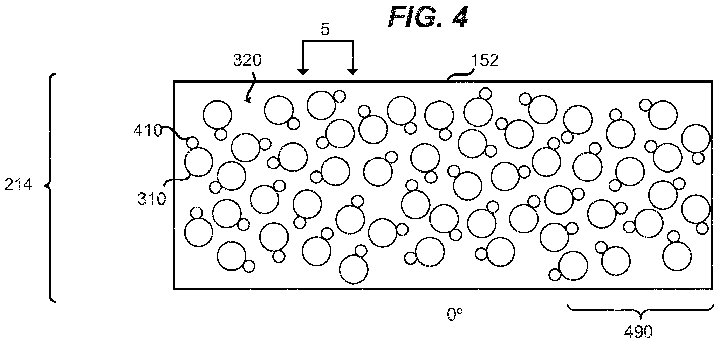

FIGS. 3-4 are section cut views of a laminate 150 in an exemplary embodiment. Specifically, FIG. 3 corresponds with view arrows 3 of FIG. 2. FIG. 3 illustrates that each layer (212, 214, 216) exhibits a different fiber orientation. Thus, even though individual fibers 310 each have the same diameter in this embodiment, fibers 310 in layers 212 and 214 appear as ovals owing to their orientation with respect to the direction of the section cut. FIG. 3 further illustrates resin 320 which occupies volume between individual fibers 310. FIG. 4 is a zoomed in view of layer 214 indicated by region 4 of FIG. 3. This illustrates that ply 152 of laminate 150 has been enhanced to include catalyst capsules 410, which are each bonded/coupled with a corresponding fiber. That is, catalyst capsules 410 are evenly interspersed among carbon fibers 310, instead of having a higher concentration along the edges of ply 152. Resin 320 forms a resin matrix 490.

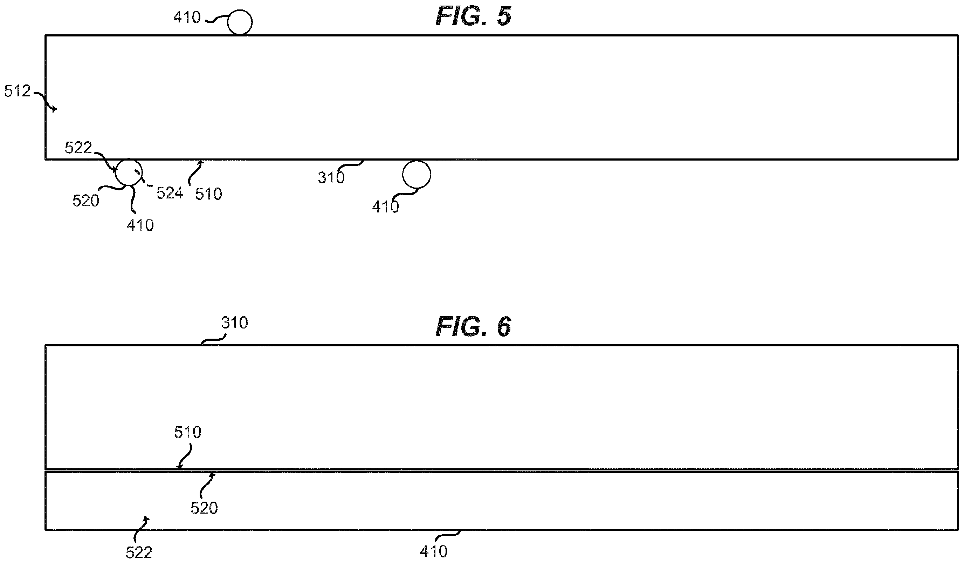

FIGS. 5-6 are zoomed in views of carbon fibers 310 to which catalyst capsules 410 are bonded and/or adhered in an exemplary embodiment. The views illustrated by FIGS. 5 and 6 correspond with region 4 of FIG. 4. FIG. 5 illustrates an embodiment wherein capsules 410 are spherical in shape (e.g., having a 1 µm (one micron) diameter that is one-fifth that of a carbon fiber 310) while FIG. 6 illustrates an embodiment wherein capsules 410 are cylindrical in shape (e.g., having a diameter/thickness between two fifths and three fifths of that of a corresponding carbon fiber 310). In both embodiments, fiber 310 includes a surface 510 which may include surface feature 512 (e.g., a sizing/chemical treatment that attracts resin monomers, a surface modification that promotes wetting of fiber 310 by resin, etc.). In embodiments wherein surface feature 512 comprises a sizing, it may remain desirable for resin 320 to chemically react with the sizing, before catalyst (e.g., aliphatic primary amines, aliphatic secondary amines, aromatic amines, or combinations thereof) are released by catalyst capsules 410. Similarly, in embodiments where surface feature 512 comprises a surface modification, it may remain desirable for resin to wet surface feature 512 before catalyst is released by catalyst capsules 410.

Catalyst capsules 410 each include shell 520, which includes surface 522. Surface 522 of a catalyst capsule 410 may adhere to surface 510 of fiber 310 via, for example, static electricity, van der Waals forces, a chemical reaction, etc., between surface feature 512 and surface 522, or between surface 510 and surface 522. In one embodiment, surface 510 includes nanotubes or other features which mediate the attraction of catalyst capsules 410 to fiber 310. Heating catalyst capsules 410 to the curing temperature may liquefy shell 520, releasing catalyst 524 and accelerating polymerization. In one embodiment, shell 520 comprises a second catalyst that melts above the curing temperature in order to release catalyst 524. In a further embodiment, capsule 410 includes a pocket of gas (not shown) which under pressure ruptures shell 520.

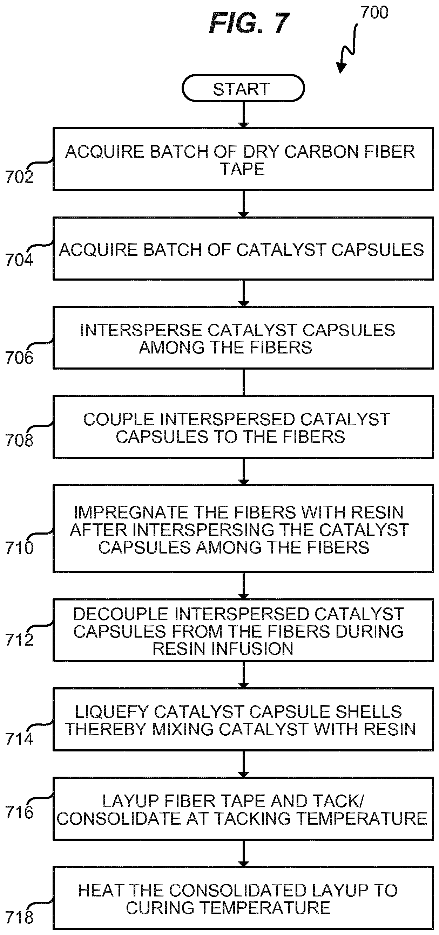

Illustrative details of the creation of plies 152 will be discussed with regard to FIG. 7.

FIG. 7 is a flowchart illustrating a method 700 for fabricating a laminate (e.g., a ply of pre-preg carbon fiber tape) in an exemplary embodiment. Method 700 addresses the problem of catalyst particles in resin inadequately penetrating through dry fibers ("fiber filtration"). The steps of method 700 are described with reference to plies 152 of FIG. 1, but those skilled in the art will appreciate that method 700 may be performed in other carbon fiber and curable materials. The steps of the flowcharts described herein are not all inclusive and may include other steps not shown. The steps described herein may also be performed in an alternative order.

According to method 700, a batch of dry carbon fibers 310 that are oriented in parallel is acquired (step 702). For example, the dry carbon fibers 310 may comprise a dry carbon fiber tape. The batch of fibers 310 is considered "dry" in that the batch has not been impregnated with curable/thermoset resin monomers awaiting polymerization. In one embodiment, fibers 310 may exhibit a 5 µm (five micron) diameter.

A batch of catalyst capsules 410 is also acquired (step 704). The catalyst capsules 410 include catalyst 524 which accelerates the polymerization of monomers of resin (which have not yet been added to dry carbon fibers 310). The catalyst capsules 410 include shells 520 which surround molecules of catalyst 524 for delivery and use in curing. At this point in time, the catalyst capsules 410 are separate from and independent of other resin components, such as resin monomers. The size of catalyst capsules 410 may be chosen in order to ensure a volume ratio between ten to one and two to one (e.g., five to one) of carbon fibers 310 to capsules 410. For example, in embodiments where catalyst capsules 410 are spherical, they may exhibit a diameter of 1 µm (one micron), and thus five catalyst capsules may attach to a fiber 310 along the circumference of fiber 310 at each location along the length of fiber 310. In embodiments where catalyst capsules 410 are elongated cylindrical shapes/filaments, they may exhibit a diameter of 2.2 µm (2.2 microns) in order to conform with such a desired ratio.

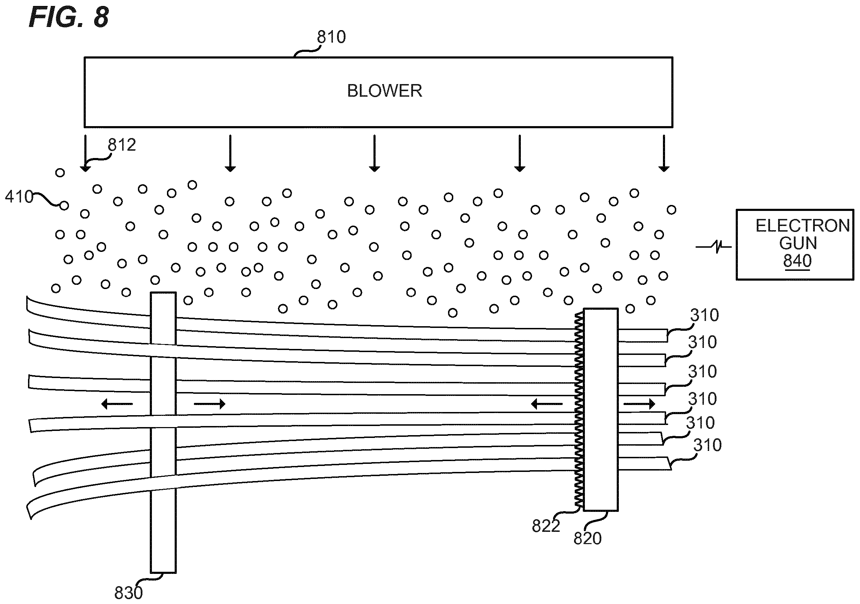

Catalyst capsules 410 are then interspersed among fibers 310 (step 706). This process is illustrated in FIG. 8, and may comprise, for example, operating blower 810 to blow capsules 410 through fibers 310 (e.g. by deflecting fibers 310 while blowing capsules 410), operating comb 820 (including teeth 822) to comb capsules 410 through fibers 310, utilizing tension bar 830 to separate fibers 310 and then sifting capsules 410 through fibers 310, etc. Regardless of the specific technique used, as capsules 410 are interspersed among fibers 310, they adhere to fibers 310 for the reasons discussed above. This means that the act of interspersing catalyst capsules 410 among fibers 310 forms a bond that couples capsules 410 to fibers 310 (step 708). The interspersion process ensures that capsules 410 are evenly distributed among fibers 310. Furthermore, fibers 310 remain dry even after capsules 410 are interspersed, because no resin (e.g., resin monomer, etc.) has been introduced to fibers 310. During the interspersion process it remains desirable to maintain the linearity of individual carbon fibers 310. Thus, the amount of deflection of carbon fibers 310 may be chosen to ensure capsule penetration, while avoiding individual fibers 310 crumpling or breaking.

At this point in time, bonds may be formed to couple capsules 410 with fibers 310 via static electricity, a chemical reaction between shell 520 and a surface feature 512 on the fibers, van der Waals forces, etc. In embodiments where static electricity is utilized, an electron gun 840 or other device may be utilized to apply a charge to capsules 410 and ensure sufficient adherence of capsules 410 to fibers 310. In embodiments where capsules 410 are chemically bonded to surface 510 of carbon fibers 310, capsules 410 may be applied via a chemical bath (*sans* resin) to fibers 310, wherein capsules 410 are included within a chemical suspension.

Next, fibers 310 are impregnated with resin 320, including resin monomers awaiting polymerization (step 710). Impregnating the batch of fibers 310 with resin 320 may comprise applying pressure to resin 320, drawing a vacuum proximate to fibers 310, or any other technique that causes resin 320 to flow between fibers 310. This step is performed after capsules 410 have already been dispersed among fibers 310. Since capsules 410 are already interspersed among fibers 310, fiber filtration ensures that capsules 410 will not be pushed out from between fibers 310 during the impregnation process.

Resin 320 is catalyst-free, which means that resin 320 does not include chemical components that accelerate the polymerization of monomers within resin 320. Hence, resin 320 is less viscous than catalyzed resin, which promotes better wetting of fibers 310 than catalyzed resin. However, resin 320 may still include resin monomers and/or a toughening phase (e.g., an interpenetrating network phase). Since resin 320 no longer includes bulky components such as capsules 410, components of resin 320 are not trapped or otherwise filtered by fibers 310 during impregnation. Within the resulting laminate, catalyst capsules 410 occupy between ten and fifteen percent of a combined volume of resin 320, catalyst capsules 410, and fibers 310. Resin 320 occupies between thirty and thirty five percent of a combined volume of resin 320, catalyst capsules 410, and fibers 310. Furthermore, fibers 310 occupy between fifty and sixty percent of a combined volume of resin 320, catalyst capsules 410, and fibers 310. In one embodiment, the act of impregnating fibers 310 with resin serves to decouple interspersed catalyst capsules 410 from fibers 310 (step 712). The impregnation process may form a resin matrix 490 occupying space between the fibers.

The catalyst capsules may also be coupled to the fibers by way of tacking. The catalyst capsules can be tacked to the fibers, by way of a tackifier, and the tacking can be released when the capsule dissolves.

After the dry fibers have been impregnated with resin, the resulting product may be implemented as a pre-preg carbon fiber tape. The carbon fiber tape may be stored for a period of time, and then laid-up as a series of plies in order to form a desired shape for a composite part. Step 714 involves liquefying the shells of capsules 410, and depending upon the embodiment may be performed prior to tacking and layup, before curing, or even during curing as the tape is heated.

An AFP machine may heat the carbon fiber tape to a tack temperature (e.g., 87.8 ºC (190º F)) which enhances the level of "tack" of the tape, ensuring better adhesion of plies (step 716). The tack temperature allows tacking together layers of tape into a laminate, while remaining below a temperature at which catalyst is released from catalyst capsules 410. At this tack temperature, catalyst capsules 410 remain solid and have not yet liquefied. After layup has been completed, the uncured part may then be moved to an autoclave for curing. In the autoclave, the uncured part, including the impregnated fibers, may be heated to a curing temperature (e.g., 143.3 ºC (290º F)) at which shells 520 of capsules 410 liquefy, releasing catalyst 524 (step 718). Catalyst 524 further mixes with resin 320 when released, accelerating polymerization and triggering curing. The curing temperature is sufficiently high that catalyst 524 will not be unintentionally released during layup. Thus, the temperature at which catalyst 524 is released is set high enough to ensure that catalyst 524 is not unintentionally released prior to curing. The temperature at which catalyst 524 is released may, for example, be the same as the cure temperature, or below the cure temperature. In one embodiment, catalyst 524 is released at a temperature used during resin infusion as part of initial curing. In any case, when shells 520 are exposed to the curing temperature, shells 520 will liquefy.

Method 700 provides a substantial benefit by ensuring that catalyst capsules are distributed evenly throughout carbon fiber laminate prior to curing. Since the capsules are interspersed while the fibers are dry, the carbon fibers may be easily flexed or otherwise deflected, enabling the capsules to penetrate deep into a batch of fibers without interference.

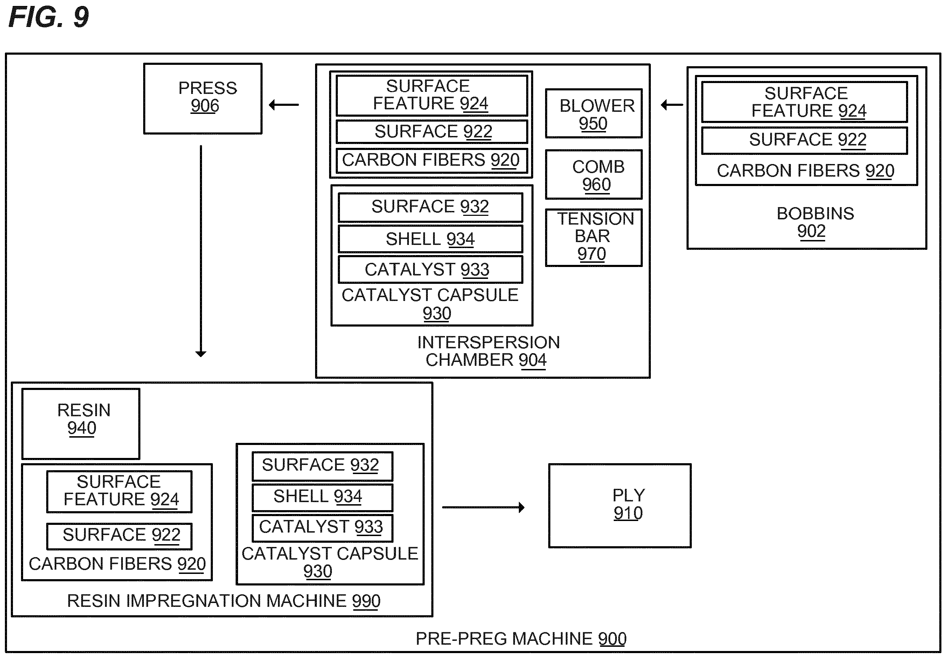

FIG. 9 is a block diagram illustrating a pre-preg machine 900 for fabricating a pre-preg carbon fiber ply 910 in an exemplary embodiment. Specifically, FIG. 9 illustrates that carbon fibers 920, including surface 922 and surface feature 924, is unrolled from bobbins 902. Catalyst capsules 930, including shell 934, catalyst 933, and surface 932, are interspersed among fibers 920 at interspersion chamber 904, which may include any suitable combination of blower 950, comb 960, and tension bar 970. These operations may result in static bonds, van der Waals bonds, or even chemical bonds between the capsules 930 and the fibers 920. Press 906 compacts fibers 920 together, and resin impregnation machine 990 is utilized to impregnate fibers 920 with resin 940, resulting in ply 910. Since capsules 930 are already interspersed among the fibers 920, the act of impregnating fibers 920 with resin 940 also mixes resin 940 among capsules 930.

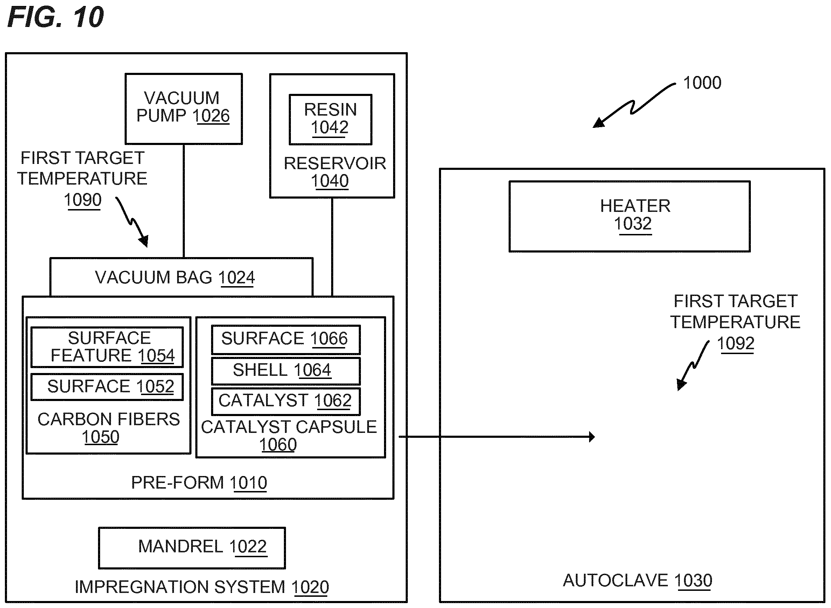

FIG. 10 is a block diagram 1000 illustrating a pre-form 1010 comprising dry carbon fibers 1050 and pre-interspersed catalyst capsules 1060 in an exemplary embodiment. According to FIG. 10, pre-form 1010 includes carbon fibers 1050, which each include surface 1052, as well as surface features 1054. Catalyst capsules 1060 are interspersed among dry carbon fibers 1050, and include surface 1066, shells 1064, and catalyst 1062. Pre-form 1010 may already be pressed/shaped into a desired geometry for curing, or may be awaiting pressing into a desired geometry by mandrel 1022 or other suitable tooling. In this embodiment, pre-form 1010 is placed between vacuum bag 1024 and mandrel 1022 and heated to first target temperature 1090. Vacuum bag 1024 is sealed to mandrel 1022, ensuring that a vacuum may be drawn pressing pre-form 1010 into mandrel 1022. The vacuum is drawn by vacuum pump 1026, which provides a further benefit by drawing resin 1042 (e.g., a catalyst-free resin) from reservoir 1040 into pre-form 1010, impregnating pre-form 1010. After pre-form 1010 has been impregnated with resin, pre-form 1010 is placed into autoclave 1030 at second target temperature 1092. In autoclave 1030, the application of heat (e.g., from heater 1032) and/or pressure serves to liquefy catalyst capsules 1060, mixing catalyst 1062 with resin 1042 and resulting in accelerated polymerization and the creation of a composite part.

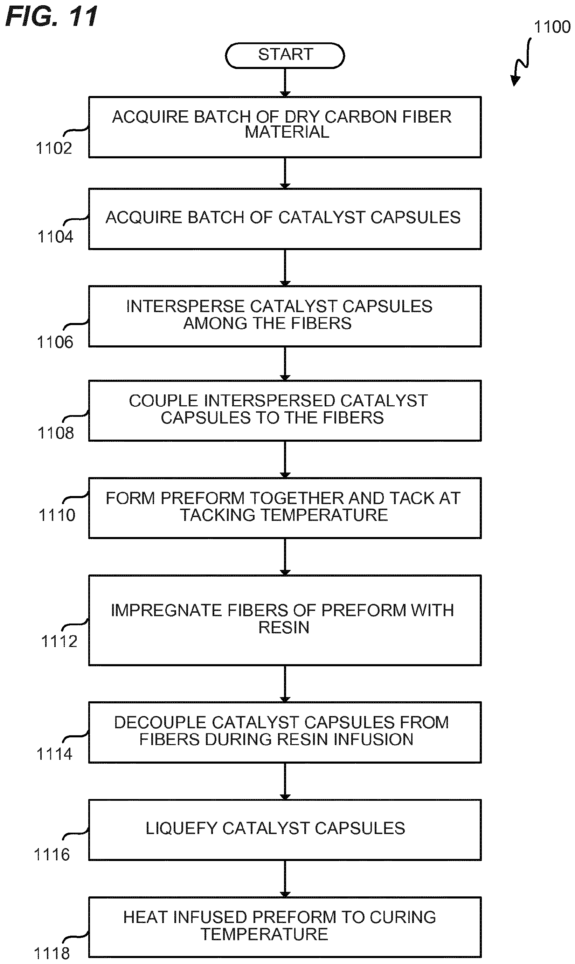

FIG. 11 is a flowchart illustrating a method 1100 of utilizing a pre-form comprising dry carbon fiber and pre-interspersed catalyst capsules in an exemplary embodiment. According to method 1100, a batch of dry carbon material comprising fibers 1050 that are oriented in parallel is acquired (step 1102).

A batch of catalyst capsules 410 is also acquired (step 1104). Catalyst capsules 1060 are then interspersed among fibers 310 (step 1106). This process is illustrated in FIG. 8, and may comprise, for example, operating blower 810 to blow capsules 1060 through fibers 1050 (e.g. by deflecting fibers 1050 while blowing capsules 1060), operating comb 820 (including teeth 822) to comb capsules 1060 through fibers 1050, utilizing tension bar 830 to separate fibers 1050 and then sifting capsules 1060 through fibers 1050, etc. Regardless of the specific technique used, as capsules 1060 are interspersed among fibers 1050, they adhere to fibers 1050 for the reasons discussed above. This means that the act of interspersing catalyst capsules 1060 among fibers 1050 forms a bond that couples capsules 1060 to fibers 1050 (step 1108).

As further illustrated in FIG. 11, pre-form 1010 is formed together and tacked at optionally tacked at a tacking temperature (e.g., 87.8 ºC (190 º F)) (step 1110). A tackifier may optionally be added to the dry fibers to tack at this stage (e.g., depending on the complexity of the form). The tackifier may comprise a thermoplastic added to the fibers, such as via spraying onto the fibers. Forming of pre-form 1010 may further comprise pressing or holding pre-form 1010 in a desired shape (e.g., via compression with a vacuum chamber or a roller). The tack temperature is below a curing temperature at which the shells of capsules 1060 have liquefied/dissolved. This consolidation may even occur later when the pre-form 1010 is placed under compression from a vacuum bag and/or autoclave while heat is added.

After pre-form 1010 has been placed in a desired location for impregnation (e.g., within a vacuum bag), it is impregnated with resin 1042 (step 1112). Impregnating pre-form 1010 with resin 1042 may break bonds between catalyst capsules 1060 and dry carbon fibers 1050 (e.g., by overcoming bonding forces resulting from static forces, van der Waals forces, a chemical reaction between catalyst capsules 1060 and surface features 1054 on carbon fibers 1050, etc.), thereby decoupling fibers 1050 from capsules 1060 (step 1114). This may mix catalyst capsules 1060 into resin 1042, and may further enable resin 1042 to wet dry carbon fibers 1050 at locations previously occupied by catalyst capsules 1060.

The impregnated pre-form 1010 may further be heated to until shells of catalyst capsules 1060 liquefy (step 1116) and a curing temperature (e.g., 143.3 ºC (290º F)) is reached (step 1118). Pre-form 1010 may further be compressed in autoclave 1030 to facilitate curing of. That is, heat activates catalyst capsules 1060 by liquefying shells 1064, mixing catalyst 1062 with resin 1042 and accelerating polymerization of resin 1042.

### Examples

In the following examples, additional processes, systems, and methods are described in the context of fabricating carbon fiber laminate.

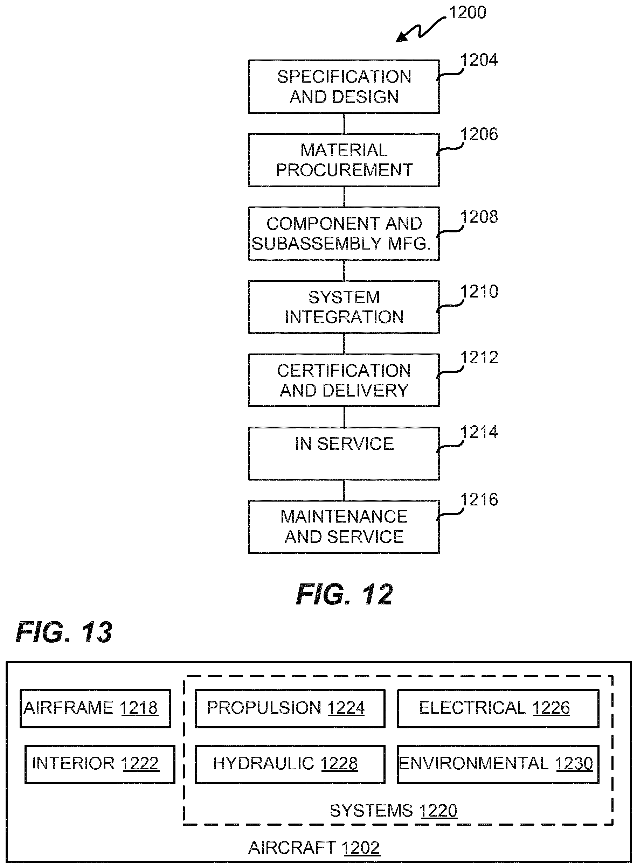

Referring more particularly to the drawings, embodiments of the disclosure may be described in the context of an aircraft manufacturing and service method 1200 as shown in FIG. 12 and an aircraft 1202 as shown in FIG. 13. During pre-production, exemplary method 1200 may include specification and design 1204 of the aircraft 1202 and material procurement 1206. During production, component and subassembly manufacturing 1208 and system integration 1210 of the aircraft 1202 takes place. Thereafter, the aircraft 1202 may go through certification and delivery 1212 in order to be placed in service 1214. While in service by a customer, the aircraft 1202 is scheduled for routine maintenance and service 1216 (which may also include modification, reconfiguration, refurbishment, and so on). Apparatus and methods embodied herein may be employed during any one or more suitable stages of the production and service method 1200 (e.g., specification and design 1204, material procurement 1206, component and subassembly manufacturing 1208, system integration 1210, certification and delivery 1212, service 1214, maintenance and service 1216) and/or any suitable component of aircraft 1202 (e.g., airframe 1218, systems 1220, interior 1222, propulsion 1224, electrical 1226, hydraulic 1228, environmental 1230).

Each of the processes of method 1200 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 13, the aircraft 1202 produced by exemplary method 1200 may include an airframe 1218 with a plurality of systems 1220 and an interior 1222. Examples of high-level systems 1220 include one or more of a propulsion system 1224, an electrical system 1226, a hydraulic system 1228, and an environmental system 1230. Any number of other systems may be included. Although an aerospace example is shown, the principles of the invention may be applied to other industries, such as the automotive industry.

As already mentioned above, apparatus and methods embodied herein may be employed during any one or more of the stages of the production and service method 1200. For example, components or subassemblies corresponding to production stage 1208 may be fabricated or manufactured in a manner similar to components or subassemblies produced while the aircraft 1202 is in service. Also, one or more apparatus embodiments, method embodiments, or a combination thereof may be utilized during the production stages 1208 and 1210, for example, by substantially expediting assembly of or reducing the cost of an aircraft 1202. Similarly, one or more of apparatus embodiments, method embodiments, or a combination thereof may be utilized while the aircraft 1202 is in service, for example and without limitation, to maintenance and service 1216. For example, the techniques and systems described herein may be used for steps 1206, 1208, 1210, 1214, and/or 1216, and/or may be used for airframe 1218 and/or interior 1222. These techniques and systems may even be utilized for systems 1220, including for example propulsion 1224, electrical 1226, hydraulic 1228, and/or environmental 1230.

In one embodiment, plies 152 comprise a portion of airframe 1218, and are laid-up and cured into a composite part during component and subassembly manufacturing 1208. The composite part may then be assembled into an aircraft in system integration 1210, and then be utilized in service 1214 until wear renders the part unusable. Then, in maintenance and service 1216, the part may be discarded and replaced with a newly manufactured part. Plies 152 may be utilized throughout component and subassembly manufacturing 1208 in order to manufacture new composite parts.

Any of the various control elements (e.g., electrical or electronic components) shown in the figures or described herein may be implemented as hardware, a processor implementing software, a processor implementing firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, a control element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

Although specific embodiments are described herein, the scope of the disclosure is not limited to those specific embodiments. The scope of the disclosure is defined by the following claims and any equivalents thereof.

## Claims

1. A preform for a composite part, the preform comprising:
dry fibers, and
catalyst capsules interspersed among the dry fibers, each catalyst capsule comprising a shell and a catalyst encapsulated within the shell, which catalyst accelerates polymerization of resin monomers usable in curing the preform, wherein one or more of the fibers are configured to attract and/or attach the interspersed catalyst capsules to the surface of the fibers.

2. The preform according to claim 1, wherein the dry fibers are configured by way of a feature or sizing arranged on a surface of one or more of the dry fibers.

3. The preform of claim 2, wherein the surface feature or sizing comprises a carbon nanotube.

4. The preform of claim 2 or 3, wherein the surface feature or sizing comprises a polymeric structure.

5. The preform of claim 4, wherein the polymeric structure is preprovided with an amount of the catalyst capsules trapped therein.

6. The preform according to any of the preceding claims, wherein the dry fibers are configured by way of providing an electrostatic charge to the surface of one or more of the dry fibers.

7. The preform according to any of the preceding claims, wherein the dry fibers are carbon fibers.

8. The preform according to any of the preceding claims, having a volume ratio of dry carbon fibers to catalyst capsules of between ten to one and two to one, preferably wherein the volume ratio of dry carbon fibers to catalyst capsules is five to one.

9. The preform according to any of the preceding claims 7 or 8, wherein the catalyst capsules are spherical and the dry carbon fibers are cylindrical, preferably wherein the catalyst capsules have a diameter one fifth a diameter of the dry carbon fibers.

10. The preform according to any of the preceding claims 7 or 8, wherein the catalyst capsules are cylindrical and the dry carbon fibers are cylindrical, preferably wherein the catalyst capsules have a diameter of between two fifths and three fifths a diameter of the dry carbon fibers;

11. The preform according to any of the preceding claims, having multiple catalyst capsules attached to each dry carbon fiber along a circumference of the dry carbon fiber.

12. The preform of any of the preceding claims, wherein the catalyst capsules comprise elongated filaments having a thickness between 2 and 3 µm (two and three microns), preferably wherein the elongated filaments have a thickness between two fifths and three fifths a thickness of the fibers.

13. The preform of any of the preceding claims, wherein the catalyst capsules have a spherical form and a diameter of 1 µm (one micron); and
wherein the catalyst capsules have a diameter that is one fifth the thickness of a dry fiber.

14. The preform of any of the preceding claims, wherein the catalyst capsules comprise a second catalyst that melts at the predetermined temperature in order to release the resin polymerizing catalyst.

15. The preform of any of the preceding claims, wherein the catalyst capsules further comprise a pocket of gas within the shell which under a predetermined pressure ruptures the shell to release the resin monomer polymerizing catalyst.

## Patentansprüche

1. Vorformling für ein Verbundteil, die Vorform umfassend:
trockene Fasern, und
Katalysatorkapseln, die zwischen die trockenen Fasern eingestreut sind, jede Katalysatorkapsel umfassend eine Hülle und einen Katalysator, der in der Hülle eingekapselt ist, wobei der Katalysator eine Polymerisation von Harzmonomeren beschleunigt, die bei einem Aushärten des Vorformlings verwendbar sind, wobei eine oder mehrere der Fasern konfiguriert sind, um die eingestreuten Katalysatorkapseln an die Oberfläche der Fasern anzuziehen und/oder daran zu befestigen.

2. Vorformling nach Anspruch 1, wobei die trockenen Fasern durch ein Merkmal oder eine Schlichte konfiguriert sind, das/die auf einer Oberfläche von einer oder mehreren der trockenen Fasern angeordnet ist.

3. Vorformling nach Anspruch 2, wobei das Oberflächenmerkmal oder die Schlichte ein Kohlenstoffnanoröhrchen umfasst.

4. Vorformling nach Anspruch 2 oder 3, wobei das Oberflächenmerkmal oder die Schlichte eine Polymerstruktur umfasst.

5. Vorformling nach Anspruch 4, bei dem die polymere Struktur mit einer Menge der Katalysatorkapseln vorversehen ist, die darin eingeschlossen ist.

6. Vorformling nach einem der vorstehenden Ansprüche, wobei die trockenen Fasern durch Bereitstellen einer elektrostatischen Ladung auf die Oberfläche einer oder mehrerer der trockenen Fasern konfiguriert sind.

7. Vorformling nach einem der vorstehenden Ansprüche, wobei die trockenen Fasern Kohlenstofffasern sind.

8. Vorform nach einem der vorstehenden Ansprüche, die ein Volumenverhältnis von trockenen Kohlenstofffasern zu Katalysatorkapseln von zwischen zehn zu eins und zwei zu eins aufweisen, wobei das Volumenverhältnis von trockenen Kohlenstofffasern zu Katalysatorkapseln vorzugsweise fünf zu eins beträgt.

9. Vorformling nach einem der vorstehenden Ansprüche 7 oder 8, wobei die Katalysatorkapseln kugelförmig und die trockenen Kohlenstofffasern zylindrisch sind, vorzugsweise wobei die Katalysatorkapseln einen Durchmesser aufweisen, der ein Fünftel des Durchmessers der trockenen Kohlenstofffasern beträgt.

10. Vorformling nach einem der vorstehenden Ansprüche 7 oder 8, wobei die Katalysatorkapseln zylindrisch sind und die trockenen Kohlenstofffasern zylindrisch sind, vorzugsweise wobei die Katalysatorkapseln einen Durchmesser von zwischen zwei Fünfteln bis drei Fünfteln des Durchmessers der trockenen Kohlenstofffasern aufweisen;

11. Vorformling nach einem der vorstehenden Ansprüche, der mehreren Katalysatorkapseln aufweist, die an jeder trockenen Kohlenstofffaser entlang eines Umfangs der trockenen Kohlenstofffaser befestigt sind.

12. Vorformling nach einem der vorstehenden Ansprüche, wobei die Katalysatorkapseln längliche Filamente umfassen, die eine Dicke zwischen 2 und 3 µm (zwei und drei Mikron) aufweisen, vorzugsweise wobei die länglichen Filamente eine Dicke zwischen zwei Fünfteln und drei Fünfteln der Dicke der Fasern aufweisen.

13. Vorformling nach einem der vorstehenden Ansprüche, wobei die Katalysatorkapseln eine kugelförmige Form und einen Durchmesser von 1 µm (ein Mikron) aufweisen; und
wobei die Katalysatorkapseln einen Durchmesser aufweisen, der ein Fünftel der Dicke einer trockenen Faser beträgt.

14. Vorformling nach einem der vorstehenden Ansprüche, wobei die Katalysatorkapseln einen zweiten Katalysator umfassen, der bei der zuvor bestimmen Temperatur schmilzt, um den Harzpolymerisationskatalysator freizusetzen.

15. Vorformling nach einem der vorstehenden Ansprüche, wobei die Katalysatorkapseln ferner eine Gastasche innerhalb der Hülle umfassen, die unter einem zuvor bestimmten Druck die Hülle aufbricht, um den Harzmonomerpolymerisationskatalysator freizusetzen.

## Revendications

1. Préforme destinée à une pièce composite, la préforme comprenant :
des fibres sèches, et
des capsules de catalyseur éparpillées parmi les fibres sèches, chaque capsule de catalyseur comprenant une enveloppe et un catalyseur encapsulé au sein de l'enveloppe, le catalyseur accélérant la polymérisation de monomères de résine utilisables dans le durcissement de la préforme, dans laquelle une ou plusieurs des fibres sont configurées pour attirer et/ou fixer les capsules de catalyseur éparpillées à la surface des fibres.

2. Préforme selon la revendication 1, dans laquelle les fibres sèches sont configurées au moyen d'une caractéristique ou d'un apprêt agencé sur une surface d'une ou plusieurs des fibres sèches.

3. Préforme selon la revendication 2, dans laquelle la caractéristique ou l'apprêt de surface comprend un nanotube de carbone.

4. Préforme selon la revendication 2 ou 3, dans laquelle la caractéristique ou l'apprêt de surface comprend une structure polymère.

5. Préforme selon la revendication 4, dans laquelle la structure polymère est préalablement pourvue d'une quantité des capsules de catalyseur piégées à l'intérieur de celle-ci.

6. Préforme selon l'une quelconque des revendications précédentes, dans laquelle les fibres sèches sont configurées au moyen de la fourniture d'une charge électrostatique à la surface d'une ou plusieurs des fibres sèches.

7. Préforme selon l'une quelconque des revendications précédentes, dans laquelle les fibres sèches sont des fibres de carbone.

8. Préforme selon l'une quelconque des revendications précédentes, ayant un rapport volumique des fibres de carbone sèches aux capsules de catalyseur compris entre dix pour une et deux pour une, de préférence dans laquelle le rapport volumique des fibres de carbone sèches aux capsules de catalyseur est de cinq pour une.

9. Préforme selon l'une quelconque des revendications 7 ou 8 précédentes, dans laquelle les capsules de catalyseur sont sphériques et les fibres de carbone sèches sont cylindriques, de préférence dans laquelle les capsules de catalyseur ont un diamètre d'un cinquième d'un diamètre des fibres de carbone sèches.

10. Préforme selon l'une quelconque des revendications 7 ou 8 précédentes, dans laquelle les capsules de catalyseur sont cylindriques et les fibres de carbone sèches sont cylindriques, de préférence dans laquelle les capsules de catalyseur ont un diamètre compris entre deux cinquièmes et trois cinquièmes d'un diamètre des fibres de carbone sèches ;

11. Préforme selon l'une quelconque des revendications précédentes, ayant des multiples capsules de catalyseur fixées à chaque fibre de carbone sèche le long d'une circonférence de la fibre de carbone sèche.

12. Préforme selon l'une quelconque des revendications précédentes, dans laquelle les capsules de catalyseur comprennent des filaments allongés ayant une épaisseur entre 2 et 3 µm (deux et trois micromètres), de préférence dans laquelle les filaments allongés ont une épaisseur comprise entre deux cinquièmes et trois cinquièmes d'une épaisseur des fibres.

13. Préforme selon l'une quelconque des revendications précédentes, dans laquelle les capsules de catalyseur ont une forme sphérique et un diamètre de 1 µm (un micromètre) ; et
dans laquelle les capsules de catalyseur ont un diamètre qui vaut un cinquième de l'épaisseur d'une fibre sèche.

14. Préforme selon l'une quelconque des revendications précédentes, dans laquelle les capsules de catalyseur comprennent un second catalyseur qui fond à la température prédéterminée afin de libérer le catalyseur de polymérisation de résine.

15. Préforme selon l'une quelconque des revendications précédentes, dans laquelle les capsules de catalyseur comprennent en outre une poche de gaz au sein de l'enveloppe qui sous une pression prédéterminée rompt l'enveloppe pour libérer le catalyseur de polymérisation de monomères de résine.
